# FASCICULE DE BREVET EUROPEEN

(11) **EP 3 138 728 B1**
(45) Date de publication et mention de la délivrance du brevet: **07.08.2019**
(21) Numéro de dépôt: 16181803.4
(22) Date de dépôt: 25.10.2013
(51) Int. Cl.: B60N 2/28, B60N 2/00, B60N 2/427

(54) **SIÈGE AUTO POUR ENFANT À MOYENS DE PROTECTION ACTIFS**
AUTO-KINDERSITZ MIT AKTIVEN SCHUTZMITTELN
CHILD CAR SEAT WITH ACTIVE PROTECTION MEANS

(30) Priorité: 26.10.2012 FR 1260272
(43) Date de publication de la demande: 08.03.2017
(62) Demande divisionnaire de: 13783064.2
(73) Titulaire: Dorel France, 49309 Cholet Cedex (FR)
(72) Inventeur: RENAUDIN, François, 49300 Cholet (FR); GARNIER, Nicolas, 49230 Saint Germain Sur Moine (FR)
(74) Mandataire: Vidon Brevets & Stratégie

(56) Documents cités:
- FR-A1- 2 720 352
- FR-A1- 2 941 181
- US-A- 5 653 501
- US-A1- 2006 049 677
- US-B1- 6 419 199
- US-B1- 7 466 221

## Description

### 1. Domaine de l'invention

Le domaine de l'invention est celui de la puériculture, et plus précisément des sièges destinés à être installés dans un véhicule, ci-après appelés siège auto pour enfant.

Plus précisément encore, l'invention concerne les sièges auto équipés de moyens de protection, ou de sécurité, actifs, et par exemple de coussins gonflables ("airbag"), mis en oeuvre, ou activés, dans une situation d'accident.

### 2. Art antérieur

Les sièges auto pour enfant sont conçus pour assurer une protection optimale de l'enfant en cas d'accident, autant que faire se peut quelque soit le choc subi par le véhicule.

Cette protection est généralement assurée, au moins en partie, par des éléments d'absorption dits passifs (plus précisément "passifs pendant l'accident"). Ces éléments d'absorption peuvent notamment être des éléments réalisés dans des matériaux de type polystyrène expansé (PSE), qui peuvent absorber tout ou partie du choc. Ces éléments d'absorption sont généralement en contact direct ou quasi direct avec une portion du corps de l'enfant (par exemple le dos, les épaules, la tête,...).

En complément, une protection active (plus précisément "active pendant l'accident") peut être mise en oeuvre. Ces moyens de protection actifs peuvent notamment être un ou plusieurs coussins gonflables, comme décrits par exemple dans le document de brevet FR2969055, au nom du Titulaire de la présente demande de brevet.

De nombreux documents décrivent de tels coussins gonflables adaptés pour sièges auto pour enfant, comme par exemple FR 2 270 352. Cependant, il n'existe pas, à l'heure actuelle, de tels sièges sur le marché.

Ceci est probablement dû, au moins en partie, à la difficulté de mise en oeuvre de tels moyens actifs. En effet, ces moyens actifs nécessitent une détection de collision, ou de décélération, afin de déclencher suffisamment rapidement les systèmes permettant de protéger l'enfant.

De tels moyens de déclenchement sont, de façon générale, connus, dans les véhicules automobiles, pour agir sur les systèmes de sécurité adaptés aux adultes installés dans le véhicule (coussins gonflables, ceinture à prétensionneur pyrotechnique, ...). Le véhicule est équipé de nombreux capteurs, et de moyens de traitement puissants, capables de décider de façon efficace si des moyens de sécurité active doivent être déclenchés.

Ces moyens propres au véhicule ne peuvent cependant pas être adaptés directement à un siège auto pour enfant. En effet, un siège auto pour enfant est destiné, par nature, à être installé dans différents types de véhicules. Inversement, un véhicule peut recevoir différents types de siège auto pour enfant. En l'absence d'une norme particulière, il n'est donc pas possible d'exploiter les données relevées et traitées par le véhicule.

En conséquence le système de détection de collision, de choc ou de décélération, destiné à déclencher les moyens actifs de protection d'un siège auto pour enfant doit être autonome et propre à ce dernier.

Les documents décrivant des systèmes de sécurité active, et notamment des coussins gonflables, pour siège auto prévoient généralement la présence de moyens de détection de chocs, pilotant le déclenchement des coussins gonflables, mais n'apportent aucune précision sur le fonctionnement de ces moyens, et notamment sur la façon dont les mesures sont effectuées et exploitées. Il s'agit pourtant d'un problème crucial. En effet, il est essentiel que les moyens actifs se déclenchent systématiquement lorsque ceci est nécessaire, et suffisamment rapidement pour assurer la protection de l'enfant.

Cependant, inversement, il est également important que des déclenchements intempestifs soient évités, autant que faire se peut, tant pour des raisons de sécurité (un déclenchement intempestif peut blesser l'enfant) que pour des raisons évidentes de coût (les systèmes actifs sont généralement à usage unique, et ils nécessitent un remplacement du siège, ou au moins des moyens de protection actifs, suite à un déclenchement).

D'autres difficultés liées au fait que le siège auto doit fonctionner de façon autonome doivent être prises en compte, telles que l'alimentation électrique des moyens de détection et d'actionnement.

### 3. objectifs de l'invention

L'invention a notamment pour objectif d'apporter une solution efficace à au moins certains de ces différents problèmes.

En particulier, selon au moins un mode de réalisation, un objectif de l'invention est de fournir un siège auto assurant un déclenchement fiable, sûr et efficace de moyens de protection actifs, lorsqu'une situation d'accident se produit.

Notamment, l'invention a pour objectif, selon au moins un mode de réalisation, de fournir un tel siège auto, évitant autant que faire se peut les déclenchements inutiles ou intempestifs, tout en garantissant une protection maximale de l'enfant transporté, en cas de besoin.

Un autre objectif de l'invention est, selon au moins un mode de réalisation, de fournir un tel siège auto, dans lequel la consommation électrique est optimisée.

L'invention a également pour objectif, selon au moins un mode de réalisation, de fournir un tel siège auto, présentant des moyens de déclenchement simple à réaliser et à mettre en oeuvre, et le cas échéant à régler, et qui soit relativement peu coûteux.

### 4. Présentation de l'invention

Pour ceci, l'invention propose un siège auto pour enfant selon la revendication 1.

Ainsi, selon cet aspect de l'invention, on évite des déclenchements inutiles, voire dangereux, des moyens de protection actifs, lorsque le siège auto ne transporte pas d'enfant et/ou qu'il n'est pas installé convenablement dans un véhicule.

Selon des modes de réalisation de l'invention, lesdits moyens de déclenchement tiennent compte d'au moins un autre premier signal délivré par un des moyens appartenant au groupe comprenant :
- les capteurs de verrouillage des sangles de maintien d'un enfant dans ledit siège auto ;
- les capteurs de présence d'un enfant dans ledit siège auto.

Selon un mode de réalisation particulier, lesdits moyens de détection comprennent des moyens électroniques, mettant en oeuvre au moins un accéléromètre.

Avantageusement, dans ce cas, lesdits moyens de détection tiennent compte d'un seuil de déclenchement réglable.

Ce seuil de déclenchement peut ainsi être réglable notamment en fonction d'au moins un des paramètres appartenant au groupe comprenant :
- le poids de l'enfant ;
- la taille de l'enfant ;
- la décélération du véhicule ;
- la vitesse du véhicule ;
- la direction du choc.

Lesdits moyens de détection peuvent également comprendre des moyens mécaniques, mettant en oeuvre au moins une masselotte mobile soumis à une force d'inertie.

Ces moyens mécaniques forment ainsi un capteur inertiel, pouvant fonctionner en permanence et sans consommer d'énergie électrique.

Selon un mode de réalisation particulier, lesdits moyens de détection comprennent des moyens mécaniques et des moyens électroniques, lesdits moyens mécaniques activant l'alimentation électrique desdits moyens électroniques, lorsqu'une force d'inertie supérieure à un premier seuil d'accélération, dit seuil de réveil, est détectée, et lesdits moyens électroniques délivrant ledit second signal, lorsqu'ils détectent une force d'accélération supérieure à un second seuil, supérieur audit premier seuil et correspondant à une situation d'accident.

On dispose ainsi d'un ensemble particulièrement efficace, puisque la consommation électrique est fortement réduite (les moyens électroniques n'étant alimentés que lorsqu'ils sont « réveillés » par les moyens mécaniques), que l'on détecte toutes les situations « à risque », ou « d'accident potentiel », grâce au seuil de réveil. Celui-ci peut être bas, puisqu'il ne pilote pas directement le déclenchement des moyens de protection. La mise en oeuvre des moyens électroniques, en complément, valident la situation « d'accident réel », nécessitant le déclenchement des moyens de protection, ou décident qu'il s'agit d'une « fausse alerte », en fonction d'une analyse fine de mesures délivrées par le ou les accéléromètres, et le cas échéant de différents paramètres permettant d'adapter le second seuil, ou seuil de déclenchement.

Selon au moins un mode de réalisation, le ou au moins un desdits seconds signaux est délivré par ledit véhicule, en fonction de signaux de mesure délivrés par des capteurs embarqués par celui-ci.

Selon un autre aspect de l'invention, on prévoit qu'au moins une partie desdits moyens de détection sont placés dans, sur ou au voisinage d'une pince d'accrochage dudit siège, destinée à coopérer avec un anneau d'ancrage solidaire dudit véhicule.

Ceci peut être important pour obtenir une détection et un déclenchement suffisamment rapides.

Selon un autre aspect de l'invention, le siège auto comprend des moyens indiquant que lesdits moyens de protection actifs ont été déclenchés et/ou empêchant l'utilisation dudit siège auto si lesdits moyens de protection actifs ont été déclenchés.

Il est en effet souhaitable qu'un siège auto ayant subi un déclenchement de moyens de protection actifs puisse être repéré, voire rendu inutilisable. En effet, la plupart des moyens de protection actifs sont à usage unique, et le siège auto ne doit ensuite plus être utilisé, ou à tout le moins être contrôlé et/ou réparé.

Selon au moins un mode de réalisation, lesdits moyens de protection actifs comprennent au moins un coussin gonflable.

Par exemple, le siège auto peut comprendre deux coussins gonflables, logés sur ou dans les bretelles d'un harnais ou sur ou dans des fourreaux montés sur lesdites bretelles, et solidarisables par des moyens de liaison.

Dans ce cas notamment, lesdits moyens de liaison portent un capteur de verrouillage, délivrant le ou au moins un desdits premiers signaux.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un exemple de siège auto équipé de coussins gonflables ;
- la figure 2 illustre schématiquement les moyens de déclenchement de moyens de protection actifs selon l'invention ;
- la figure 3 illustre schématiquement un mode de réalisation particulier, combinant des moyens mécaniques et des moyens électroniques;
- la figure 4 illustre le mode de fonctionnement des moyens de la figure 3.

### 6. Description de modes de réalisation particuliers

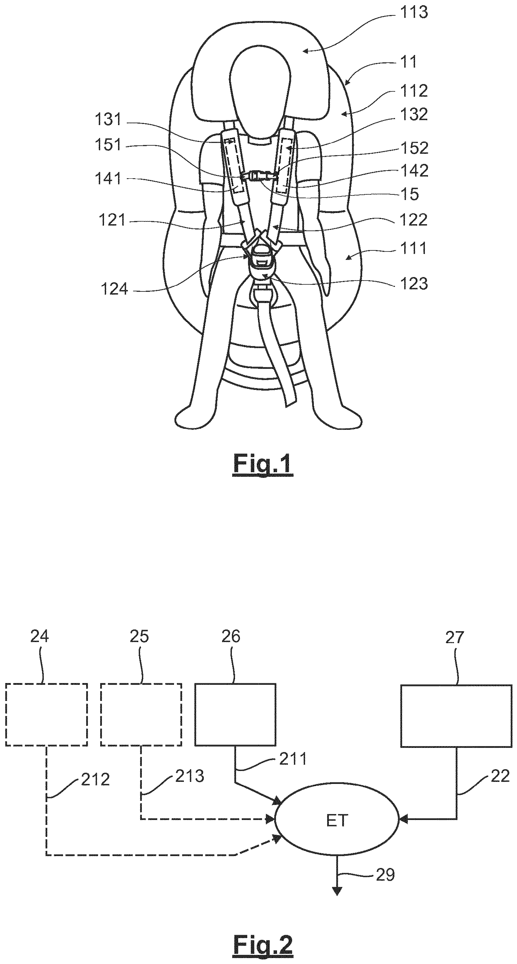

L'invention concerne donc les sièges auto pour enfant, équipés de moyens de protection actifs, en conséquence de moyens de déclenchement de ces moyens de protection actifs en cas de besoin (choc, accident, décélération supérieure à un seuil prédéterminé,...). Dans le mode de réalisation illustré, ces moyens de protection actifs comprennent deux coussins gonflables solidarisables, tels qu'illustrés par la figure 1, et décrits en détail par le document de brevet FR2969055 déjà mentionné.

Ce siège auto comprend un harnais 12 présentant deux bretelles 121, 122 destinées à s'étendre à partir des épaules le long du torse d'un enfant, et portant chacune un élément de sécurité gonflable 141, 142, logé, dans ce mode de réalisation, dans un fourreau 131, 132 monté respectivement sur les bretelles 121, 122, et apte à se gonfler en cas de choc supérieur à un seuil prédéterminé.

Ces éléments de sécurité gonflables 141 et 142 sont par ailleurs reliés par des moyens de solidarisation 15, les solidarisant l'un à l'autre, lorsque l'enfant est installé dans le siège.

Ces éléments de solidarisation 15 comprennent, dans le mode de réalisation illustré, deux portions souples, ou lanières, 151 et 152, équipées chacune d'un élément de boucle respectivement mâle et femelle, pouvant s'insérer l'un dans l'autre pour solidariser les deux lanières 151 et 152, et pouvant être séparées l'un de l'autre, par une action manuelle appropriée (choisie de façon que l'enfant installé ne puisse pas désolidariser lui-même ces moyens de solidarisation).

Selon ce mode de réalisation, les moyens de solidarisation 15 assurent également le maintien dans une position suffisamment rapprochée des deux bretelles 121 et 122, lorsqu'un enfant est installé dans le siège (fonction « chest clip » en anglais). Ceci permet de garantir que les bretelles sont bien placées, et d'éviter que l'enfant passe un bras sous une des bretelles et/ou retire l'une des bretelles alors que le harnais est bouclé.

Ces éléments de sécurité, ou coussins, gonflables doivent être gonflés rapidement, en cas d'accident, pour assurer la protection de l'enfant. Il est cependant important d'éviter qu'un déclenchement intempestif des coussins gonflables soit déclenché, en particulier lorsque le siège n'est pas installé convenablement dans le véhicule et/ou qu'aucun enfant n'est présent dans le siège auto.

Pour cela, selon un premier aspect de l'invention, illustré par la figure 2, les moyens de déclenchement, qui sont avantageusement intégralement portés par le siège auto, tiennent compte d'au moins deux informations distinctes :
- au moins un premier signal 211, 212 et/ou 213, indiquant un usage réel et/ou correct du siège dans le véhicule ; et
- au moins un second signal 22, délivré par des moyens de détection, indiquant la détection d'une situation d'accident.

La première série de signaux a pour but d'éviter un déclenchement des moyens de protection actifs, même en présence d'un choc ou d'un accident, si ceci n'est pas nécessaire, ou dangereux.

Ainsi, il est souhaitable d'éviter les déclenchements lorsque le siège auto n'est pas installé dans un véhicule (par exemple lors de son transport ou de son stockage). Il n'est également pas souhaitable que les moyens de protection actifs se déclenchent si le siège auto n'est pas installé correctement, et par exemple maintenus par ces pinces Isofix®. Ainsi, un premier capteur 24 de bon verrouillage, ou de bonne installation du siège dans le véhicule (par exemple un capteur associé aux pinces Isofix®) est prévu, pour délivrer une information 211 d'accrochage correct de celle-ci aux anneaux prévus à cet effet dans le véhicule. Il est ainsi à noter que l'équipement produisant le premier signal comprend selon l'invention au moins un capteur de verrouillage du siège auto au véhicule, ce capteur étant de préférence porté par le siège auto.

Il est par ailleurs souhaitable que les moyens de protection actifs ne se déclenchent pas, même si le siège auto est correctement installé dans le véhicule, si celui-ci ne transporte pas d'enfant.

Selon une première approche, cette détection peut être assurée par des moyens de contrôle 25 du verrouillage du harnais de l'enfant dans le siège auto, et par exemple du bouclage correct du clip de thorax, reliant les deux bretelles du harnais. Cette approche est notamment intéressante dans le cas du siège de la figure 1, puisque ce clip doit également être verrouillé pour assurer un déploiement correct des coussins gonflables.

D'autres capteurs de présence de l'enfant 26 peuvent être prévus, en alternative ou en complément, par exemple à l'aide d'un capteur de poids intégré à l'assise du siège auto.

Il convient ensuite de détecter de façon efficace une situation d'accident. Ceci est assuré par la détection 27 d'un ou plusieurs seuils de décélération prédéterminés, délivrant des premiers signaux de détection 22. Selon une première approche, ces moyens de détection peuvent être purement mécaniques. Cette approche présente l'avantage de ne pas nécessiter d'alimentation électrique, ce qui permet de simplifier la réalisation du siège auto, et d'éviter les risques dus à la nécessité d'un fonctionnement en autonomie (qui suppose la mise en oeuvre de batteries autonomes, et le contrôle de la charge suffisante de cette dernière, pour générer une alerte dans le cas contraire).

Un tel système mécanique peut notamment mettre en oeuvre un ressort taré, associé à une masselotte mobile, formant un capteur inertiel. Lorsque la masselotte se déplace au-delà d'un seuil choisi, la tension du ressort dépasse également un seuil correspondant, et un signal de détection 22 est généré.

Différents modes de réalisation d'un tel système mécanique sont décrits dans la demande de brevet conjointe, au nom du même titulaire que la présente demande, et ayant pour titre « Dispositif de blocage d'une sangle dans un siège auto pour enfant et siège auto pour enfant comprenant un tel dispositif de blocage ». D'autres modes de réalisation permettant d'obtenir un résultat similaire sont bien sûr utilisables.

Un inconvénient de cette approche est qu'elle ne permet pas de réglage sélectif : un seul tarage du ressort est possible. Par sécurité, on est donc conduit à limiter le seuil prédéterminé, ce qui augmente le risque de déclenchement intempestif.

Selon la deuxième approche, il est possible d'utiliser des moyens électroniques de détection, mettant en oeuvre un ou plusieurs accéléromètres. Cette approche permet d'effectuer une détection plus précise, et en conséquence de disposer d'un seuil de déclenchement programmable, en fonction de divers paramètres. En conséquence, on peut ainsi réduire le risque de déclenchement intempestif.

En revanche, ce système doit être en veille en permanence, ce qui suppose une alimentation en énergie électrique suffisante pour que le siège puisse être utilisé pendant plusieurs mois jour/année.

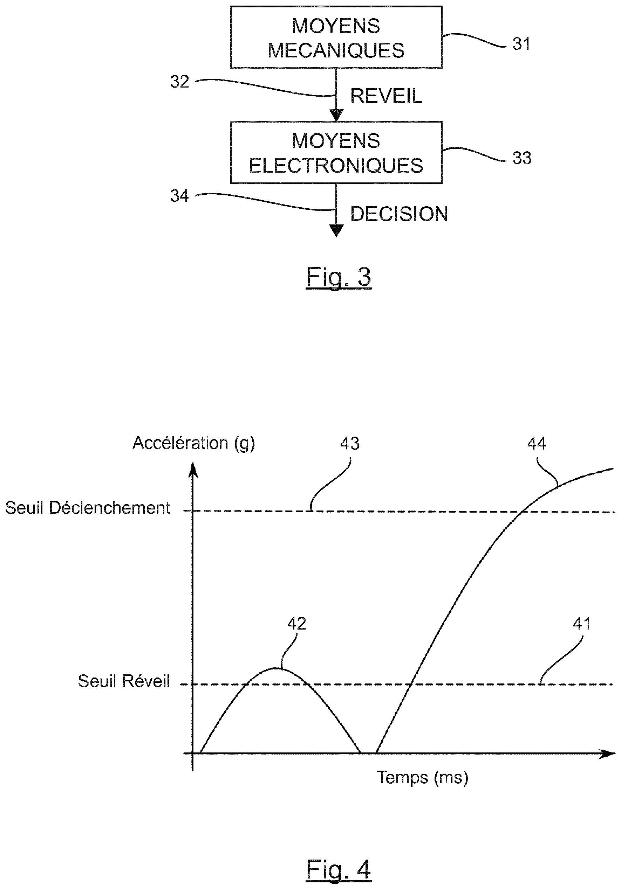

Selon un troisième mode de réalisation, illustré par la figure 3, on prévoit de combiner les deux approches décrites ci-dessus, en confiant aux moyens mécaniques 31 une fonction de réveil 32, ou d'activation, des moyens électroniques 33 en cas de situation d'accident potentiel. Dès qu'ils sont activés, les moyens électroniques effectuent une analyse plus poussée, et plus précise, de la situation, pour décider si la situation d'accident potentiel est ou non une situation d'accident réel, nécessitant le déclenchement 34 des moyens de protection actifs.

En d'autres termes, comme illustré par la figure 4, les moyens mécaniques réagissent à un seuil de réveil 41 relativement bas, englobant un nombre de situation ne nécessitant pas le déclenchement des moyens de protection actifs. Dès que le seuil de réveil est franchi (42) les moyens mécaniques réveillent les moyens électroniques 43, qui analysent la situation, et décident du déclenchement, si l'accélération dépasse (44) un seuil de déclenchement.

Ce seuil de déclenchement peut, le cas échéant, être réglable, ou variable, en fonction de différents paramètres, tels que le poids de l'enfant (déterminé à l'aide d'un capteur placé dans l'assise, qui peut également servir de capteur de présence):
- La taille de l'enfant (par exemple déterminée en fonction de la têtière par rapport au dossier) ;
- La décélération du véhicule ;
- La vitesse du véhicule ;
- La direction du choc.

Pour assurer la sécurité de l'enfant, la détection doit être effectuée très rapidement et la commande de déclenchement doit être émise de préférence entre 10 et 20 millisecondes après le choc. Les tests effectués montrent que la combinaison de moyens mécaniques et électroniques permet d'atteindre ce résultat.

Pour obtenir une détection rapide, et précise, de la décélération correspondant à un choc, les moyens de détection sont préférablement placés au plus près possible des points d'ancrages du véhicule (anneaux Isofix®), car ce sont ces éléments qui reçoivent en premier la décélération due à la collision. Ainsi, les moyens de détection peuvent être placés dans l'embase, au voisinage des pinces Isofix®, voire en tout ou en partie directement sur ou dans ces pinces Isofix®.

Bien que le mode de réalisation décrit en relation avec la figure 1 présente le déclenchement de coussins gonflables, l'approche de l'invention peut bien sur être mise en oeuvre, en complément ou en alternative, pour assurer le déclenchement d'autres types de moyens de protection actifs, tels que :
- des moyens pour bloquer ou augmenter la tension d'une sangle de « top tether », ou sangle anti-basculement, destinée à solidariser la partie supérieure dudit siège et un point d'ancrage dans le véhicule ;
- des moyens pour bloquer ou augmenter la tension des sangles de harnais dudit siège auto, destinées à maintenir un enfant dans le siège ;
- des moyens pour bloquer ou augmenter la tension d'une sangle de liaison entre une embase et un fauteuil mobile en rotation par rapport à l'embase ;
- des moyens de redressement du dossier du siège auto ;
- des moyens de déploiement d'une bosse anti-sous-marinage ;
- des moyens pour comprimer le siège enfant sur une banquette du véhicule au niveau des ancrages Isofix® inférieurs ;
- des moyens pour modifier l'inclinaison du siège par l'intermédiaire d'une jambe de force.

Selon un autre aspect de l'invention, le siège auto comprend des moyens indicateurs, précisant si les moyens de protection actifs ont été déclenchés et/ou empêchant l'utilisation dudit siège auto si lesdits moyens de protection actifs ont été déclenchés.

Ceci permet de repérer, et/ou de rendre inutilisable, un siège auto ayant subi un déclenchement de moyens de protection actifs. En effet, la plupart des moyens de protection actifs sont à usage unique, et le siège auto ne doit ensuite plus être utilisé, ou à tout le moins être contrôlé et/ou réparé.

## Revendications

1. Siège auto pour enfant, comprenant des moyens de protection actifs et des moyens de déclenchement desdits moyens de protection actifs, en cas de besoin,
**caractérisé en ce que** lesdits moyens de déclenchement sont portés par le siège auto et délivrent une commande de déclenchement desdits moyens de protection actifs en fonction d'une combinaison d'au moins deux signaux :
- au moins un premier signal (211, 212, 213) délivré par au moins un capteur de verrouillage du siège auto au véhicule, ledit capteur de verrouillage étant porté par le siège auto, et
- au moins un second signal (22) délivré par des moyens de détection, indiquant la détection d'une situation d'accident,
et **en ce que** lesdits moyens de protection actifs comprennent au moins deux des éléments appartenant au groupe comprenant :
- au moins un coussin gonflable (141, 142) ;
- des moyens pour bloquer ou augmenter la tension d'une sangle de « top tether », ou sangle anti-basculement, destinée à solidariser une partie supérieure dudit siège et un point d'ancrage dans ledit véhicule ;
- des moyens pour bloquer ou augmenter la tension des sangles (121, 122) de harnais (12) dudit siège auto, destinées à maintenir un enfant dans ledit siège ;
- des moyens pour bloquer ou augmenter la tension d'une sangle de liaison entre une embase et un fauteuil mobile en rotation par rapport à ladite embase ;
- des moyens de redressement du dossier dudit siège auto ;
- des moyens pour comprimer le siège enfant sur un fauteuil ou une banquette du véhicule, au niveau des ancrages Isofix® inférieurs ;
- des moyens pour modifier l'inclinaison du siège par l'intermédiaire d'une jambe de force.

2. Siège auto selon la revendication 1, **caractérisé en ce que** le ou au moins un desdits premiers signaux est délivrés par un des moyens appartenant au groupe comprenant :
- les capteurs de verrouillage dudit siège auto audit véhicule ;
- les capteurs de verrouillage des sangles de maintien d'un enfant dans ledit siège auto ;
- les capteurs de présence d'un enfant dans ledit siège auto.

3. Siège auto selon l'une quelconque des revendications 1 et 2, **caractérisé en ce que** lesdits moyens de détection comprennent des moyens électroniques, mettant en oeuvre au moins un accéléromètre.

4. Siège auto selon la revendication 3, **caractérisé en ce que** lesdits moyens de détection tiennent compte d'un seuil de déclenchement réglable.

5. Siège auto selon la revendication 4, **caractérisé en ce que** ledit seuil de déclenchement est réglable en fonction d'au moins un des paramètres appartenant au groupe comprenant :
- le poids de l'enfant ;
- la taille de l'enfant ;
- la décélération du véhicule ;
- la vitesse du véhicule ;
- la direction du choc.

6. Siège auto selon l'une quelconque des revendications 1 à 4, **caractérisé en ce que** lesdits moyens de détection comprennent des moyens mécaniques, mettant en oeuvre au moins une masselotte mobile soumis à une force d'inertie.

7. Siège auto selon les revendications 3 et 6, **caractérisé en ce que** lesdits moyens de détection comprennent des moyens mécaniques et des moyens électroniques, lesdits moyens mécaniques activant l'alimentation électrique desdits moyens électroniques, lorsqu'une force d'inertie supérieure à un premier seuil d'accélération, dit seuil de réveil, est détectée, et lesdits moyens électroniques délivrant ledit second signal, lorsqu'ils détectent une force d'accélération supérieure à un second seuil, supérieur audit premier seuil et correspondant à une situation d'accident.

8. Siège auto selon l'une quelconque des revendications 1 à 7, **caractérisé en ce que** le ou au moins un desdits seconds signaux est délivré par ledit véhicule, en fonction de signaux de mesure délivrés par des capteurs embarqués par celui-ci.

9. Siège auto selon l'une quelconque des revendications 1 à 8, **caractérisé en ce qu'**au moins une partie desdits moyens de détection sont placés dans, sur ou au voisinage d'une pince d'accrochage dudit siège, destinée à coopérer avec un anneau d'ancrage solidaire dudit véhicule.

10. Siège auto selon l'une quelconque des revendications 1 à 9, **caractérisé en ce qu'**il comprend des moyens indiquant que lesdits moyens de protection actifs ont été déclenchés et/ou empêchant l'utilisation dudit siège auto si lesdits moyens de protection actifs ont été déclenchés.

11. Siège auto selon l'une quelconque des revendications 1 à 10, **caractérisé en ce que** lesdits moyens de protection actifs comprennent deux coussins gonflables, logés sur ou dans les bretelles d'un harnais ou sur ou dans des fourreaux montés sur lesdites bretelles, et solidarisables par des moyens de liaison.

12. Siège auto selon la revendication 11, **caractérisé en ce que** lesdits moyens de liaison portent un capteur de verrouillage, délivrant le ou au moins un desdits premiers signaux.

## Patentansprüche

1. Kinderfahrzeugsitz, der aktive Schutzmittel und Mittel zum Auslösen der aktiven Schutzmittel, falls erforderlich, aufweist,
**dadurch gekennzeichnet, dass** die Mittel zum Auslösen von dem Fahrzeugsitz getragen werden und einen Auslösebefehl der aktiven Schutzmittel als Funktion einer Kombination wenigstens zweier Signale liefert:
- wenigstens ein erstes Signal (211, 212, 213), das durch wenigstens einen Verriegelungssensor des Fahrzeugsitzes im Fahrzeug geliefert wird, wobei der Verriegelungssensor vom Fahrzeugsitz getragen wird, und
- wenigstens ein zweites Signal (22), das von Erfassungsmitteln geliefert wird und die Erfassung einer Unfallsituation anzeigt,
und dadurch, dass die aktive Schutzeinrichtung mindestens zwei der Elemente umfasst, die zu der Gruppe gehören, die umfasst:
- mindestens ein aufblasbares Kissen;
- Mittel zum Blockieren oder Erhöhen der Spannung eines "top tether" Gurtes oder eines Kippschutzgurtes, bestimmt zum Befestigen eines oberen Teils des Sitzes und eines Befestigungspunktes in dem Fahrzeug;
- Mittel zum Blockieren oder Erhöhen der Spannung der Bänder (121, 122) des Gurtes (12) des Fahrzeugsitzes, bestimmt zum Halten eines Kindes in dem Fahrzeugsitz;
- Mittel zum Blockieren oder Erhöhen der Spannung eines Verbindungsgurtes zwischen einer Basis und einem drehbar bezüglich der Basis bewegbaren Stuhl;
- Mittel zum Richten der Rückenlehne des Autositzes;
- Mittel zum Zusammendrücken des Kindersitzes auf einen Rollstuhl oder einer Bank des Fahrzeugs, auf der Ebene der unteren Isofix ® - Ankerpunkte;
- Mittel zum Verändern der Neigung des Sitzes mittels einer Strebe.

2. Fahrzeugsitz nach Anspruch 1, **dadurch gekennzeichnet, dass** das oder wenigstens eines der ersten Signale durch eines der Mittel geliefert wird, die zu der Gruppe gehören, die umfasst:
- Verriegelungssensoren des Fahrzeugsitzes in dem Fahrzeug;
- Verriegelungssensoren der Gurte zum Halten eines Kindes in dem Fahrzeugsitz;
- Sensoren der Anwesenheit eines Kindes in dem Fahrzeugsitz.

3. Fahrzeugsitz nach einem der Ansprüche 1 und 2, **dadurch gekennzeichnet, dass** die Erfassungsmittel elektronischen Mittel aufweisen, die wenigstens einen Beschleunigungsmesser implementieren.

4. Fahrzeugsitz nach Anspruch 3, **dadurch gekennzeichnet, dass** die Erfassungsmittel einen einstellbaren Auslöseschwellwert berücksichtigen.

5. Fahrzeugsitz nach Anspruch 4, **dadurch gekennzeichnet, dass** der Auslöseschwellwert als Funktion wenigstens eines der Parameter einstellbar ist, die zu der Gruppe gehören, die umfasst:
- das Gewicht des Kindes;
- die Größe des Kindes;
- die Verzögerung des Fahrzeugs;
- die Geschwindigkeit des Fahrzeugs;
- die Richtung des Aufpralls.

6. Fahrzeugsitz nach einem der Ansprüche 1 bis 4, **dadurch gekennzeichnet, dass** die Erfassungsmittel mechanische Mittel umfassen, die wenigstens eine bewegliche Trägheitsmasse implementieren, die einer Trägheitskraft ausgesetzt ist.

7. Fahrzeugsitz nach einem der Ansprüche 3 und 6, **dadurch gekennzeichnet, dass** die Erfassungsmittel mechanische Mittel und elektronische Mittel aufweisen, wobei die mechanischen Mittel die elektrische Versorgung der elektronischen Mittel aktivieren, wenn eine Trägheitskraft erfasst wird, die größer als ein erster Beschleunigungsschwellwert, genannt Aufweckschwellwert, ist und wobei die elektronischen Mittel das zweite Signal liefern, wenn sie eine Beschleunigungskraft detektieren, die größer als ein zweiter Schwellwert ist, der größer als der erste Schwellwert ist und einer Unfallsituation entspricht.

8. Fahrzeugsitz nach einem der Ansprüche 1 bis 7, **dadurch gekennzeichnet, dass** das oder wenigstens eines der zweiten Signale durch das Fahrzeug als Funktion von Messsignalen geliefert wird, die durch darin eingebettete Sensoren geliefert werden.

9. Fahrzeugsitz nach einem der Ansprüche 1 bis 8, **dadurch gekennzeichnet, dass** wenigstens ein Teil der Erfassungsmittel in, auf, oder in der Nähe einer Befestigungsklammer des Sitzes angeordnet ist, dazu bestimmt, mit einem in dem Fahrzeug befestigten Verankerungsring zusammenzuwirken.

10. Fahrzeugsitz nach einem der Ansprüche 1 bis 9, **dadurch gekennzeichnet, dass** er Mittel aufweist, die anzeigen, dass die aktiven Schutzmittel ausgelöst wurden und/oder die Verwendung des Fahrzeugsitzes verhindern, falls die aktiven Schutzmittel ausgelöst wurden.

11. Fahrzeugsitz nach einem der Ansprüche 1 bis 10, **dadurch gekennzeichnet, dass** die aktiven Schutzmittel zwei aufblasbare Kissen aufweisen, die auf oder in den Schultergurten eines Gurtzeugs oder auf oder in den Ärmeln, die auf den Schultergurten montiert sind, angeordnet sind und mittels Verbindungsmitteln verbindbar sind.

12. Fahrzeugsitz nach Anspruch 11, **dadurch gekennzeichnet, dass** die Verbindungsmittel einen Verriegelungssensor tragen, der das oder wenigstens eines der ersten Signale liefert.

## Claims

1. Child car seat, comprising active protection means and means for triggering said active protection means, in case of need,
**characterised in that** said triggering means are carried by said child seat and deliver a command for triggering said active protection means according to a combination of at least two signals:
- at least one first signal (211, 212, 213) delivered by a at least one sensor of the locking of said car seat to said vehicle, said sensor of the locking being carried by said seat, and
- at least one second signal (22) delivered by detection means, indicating the detection of an accident situation,
and **in that** said active protection means include at least two of the means belonging to the group comprising:
- at least one airbag (141, 142);
- means for blocking or increasing the tension of a "top tether" strap, or anti-tipping strap, intended to fasten an upper portion of said seat and an anchoring point in said vehicle;
- means for blocking or increasing the tension of the harness (12) straps (121, 122) of said car seat, intended to maintain a child in said seat;
- means for blocking or increasing the tension of a connection strap between a base and a mobile armchair in rotation with respect to said base;
- means for uprighting the seatback of said car seat;
- means for compressing the child seat on an armchair or a seat of the vehicle, on lower Isofix® anchorings;
- means for modifying the inclination of the seat by the intermediary of a support leg.

2. Car seat according to claim 1, **characterised in that** the or at least one of said first signals is delivered by one of the means belonging to the group comprising:
- the sensors of the locking of said car seat to said vehicle;
- the sensors of the locking of the straps for retaining a child in said car seat;
- the sensors of the presence of a child in said car seat.

3. Car seat according to any of the claims 1 and 2, **characterised in that** said detection means include electronic means, implementing at least one accelerometer.

4. Car seat according to claim 3, **characterised in that** said detection means take an adjustable triggering threshold into account.

5. Car seat according to claim 4, **characterised in that** said triggering threshold can be adjusted according to at least one of the parameters belonging to the group comprising:
- the weight of the child;
- the height of the child;
- the deceleration of the vehicle;
- the speed of the vehicle;
- the direction of the impact.

6. Car seat according to any of the claims 1 to 4, **characterised in that** said detection means comprise mechanical means, implementing at least one mobile inertia block subjected to a force of inertia.

7. Car seat according to claims 3 and 6, **characterised in that** said detection means include mechanical means and electronic means, said mechanical means activating the electrical power supply of said electronic means, when a force of inertia greater than a first acceleration threshold, called the waking threshold, is detected, and said electronic means delivering said second signal, when they detect an acceleration force that is greater than a second threshold, greater than said first threshold and corresponding to an accident situation.

8. Car seat according to any of the claims 1 to 7, **characterised in that** the or at least one of said second signals is delivered by said vehicle, according to the measurement signals delivered by sensors embedded in the latter.

9. Car seat according to any of the claims 1 to 8, **characterised in that** at least one portion of said detection are placed in, on or in the vicinity of a hooking clamp of said seat, intended to cooperate with an anchoring ring integral with said vehicle.

10. Car seat according to any of the claims 1 to 9, **characterised in that** it comprises means that indicate that said active protection means have been triggered and/or that prevent the use of said car seat if said active protection means have been triggered.

11. Car seat according to any of claims 1 to 10, **characterised in that** it comprises two airbags, housed on or in the shoulder straps of a harness or on or in sheaths mounted on said shoulder straps, and which can be made integral by connecting means.

12. Car seat according to claim 11, **characterised in that** said connecting means carry a locking sensor, delivering the or at least one of said first signals.
